# EUROPÄISCHE PATENTSCHRIFT

(11) **EP 1 806 047 B1**
(45) Veröffentlichungstag und Bekanntmachung des Hinweises auf die Patenterteilung: **04.03.2009**
(21) Anmeldenummer: 07107131.0
(22) Anmeldetag: 15.07.2004
(51) Int. Cl.: A01F 7/06, A01F 12/20

(54) **Rotor einer Gutbearbeitungseinrichtung eines Mähdreschers**
Rotor of a crop treatment device of a combine harvester
Rotor d'un dispositif de traitement de récolte d'une moissonneuse-batteuse

(30) Priorität: 24.07.2003 US 626220
(43) Veröffentlichungstag der Anmeldung: 11.07.2007
(62) Teilanmeldung aus: 04103388.7
(73) Patentinhaber: Deere & Company, Moline, IL 61265-8098 (US)
(72) Erfinder: Mackin, Ryan Patrick, Milan, IL 61264 (US); Heim, Daniel Marc, Moline, IL 61265 (US); Ehrecke, Kevin Laverne, Davenport, IA 52804 (US); Puryk, Corwin Marcus Raymond, East Moline, IL 61244 (US); Stickler, Mark Frederick, Silvis, IL 61282 (US)
(74) Vertreter: Holst, Sönke

(56) Entgegenhaltungen:
- US-A- 3 848 609
- US-A- 4 139 013
- US-B1- 6 190 252

## Beschreibung

Die Erfindung betrifft einen Rotor einer Gutbearbeitungseinrichtung eines Mähdreschers, mit einer Trommel, an der ein Beschickungselement und ein Erntegutbearbeitungselement befestigt sind, das mindestens einen Guteingriffsabschnitt umfasst, der an einer Trägerstruktur angeordnet ist, die am Rotor befestigt ist.

Mähdrescher sind große Maschinen, die landwirtschaftlich angebautes Erntegut ernten, dreschen, trennen und reinigen. Das erhaltene saubere Korn wird in einem am Mähdrescher angeordneten Korntank gelagert. Es kann durch einen Entladeschneckenförderer aus dem Korntank auf einen Lastwagen, Anhänger oder in ein anderes Behältnis entladen werden.

Rotormähdrescher weisen einen oder zwei große Rotoren zum Dreschen und Trennen des Ernteguts auf. Bei den meisten Rotormähdreschern ist der Rotor oder sind die Rotoren entlang der Längsachse des Mähdreschers ausgerichtet. Diese Rotoren sind mit einem Beschickungsabschnitt zur Annahme des geernteten Materials, einem Dreschabschnitt zum Dreschen des Materials aus dem Beschickungsabschnitt und einem Trennabschnitt ausgestattet, um im vom Dreschabschnitt einlaufenden Erntegut enthaltene Körner freizusetzen.

Rotoren für Mähdrescher wurden in einer Vielzahl von Konfigurationen bereitgestellt, um die Effizienz bei der Ernte bei einer großen Vielzahl an Erntegutarten und -bedingungen zu optimieren. Es wurden beispielweise Änderungen an zylindrischen und kegelstumpfförmigen Trommelformen durchgeführt, wie sie in der US 4 139 013 A, US 4 266 560 A und US 4 274 426 A offenbart wurden.

Die US 3 848 609 A beschreibt einen Mähdrescher mit wendelförmigen Beschickungselementen, an die sich reibleistenförmige, sich in axialer Richtung des Rotors erstreckende Dreschelemente anschließen. Der Zwischenraum zwischen den Beschickungselementen und den Dreschelementen wird durch ein dreieckiges Profilstück geschlossen, das mit dem Beschickungselement verschweißt ist.

Die US 6 190 252 B beschreibt einen Rotor für einen Mähdrescher, bei dem Dreschelemente um den Umfang verteilt sind. Wendelförmige Beschickungselemente enden an der Seitenflanke der Dreschelemente.

Die der Erfindung zu Grunde liegende Aufgabe wird darin gesehen, einen verbesserten Rotor für einen Mähdrescher bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung bezieht sich auf einen Rotor einer Gutbearbeitungseinrichtung eines Mähdreschers. Der Rotor umfasst eine Trommel, an der ein vorzugsweise wendelförmiges Beschickungselement und ein Erntegutbearbeitungselement befestigt sind. Das ist Erntegutbearbeitungselement ist an seiner Vorderseite mit einer Beschickungselementbefestigungseinrichtung ausgestattet, an der ein rückwärtiger Bereich des wendelförmigen Beschickungselements angeschraubt wird.

Außerdem kann das Erntegutbearbeitungselement derart gestaltet sein, dass es auf einen kegelstumpfförmigen Abschnitt des Rotors passt, wobei seine äußere Oberfläche bei einer Drehung des Rotors einen zylindrischen Mantel beschreibt.

In den Zeichnungen ist ein nachfolgend näher beschriebenes Ausführungsbeispiel der Erfindung dargestellt. Es zeigt:
- Fig. 1: eine halbschematische Seitenansicht eines Rotormähdreschers,

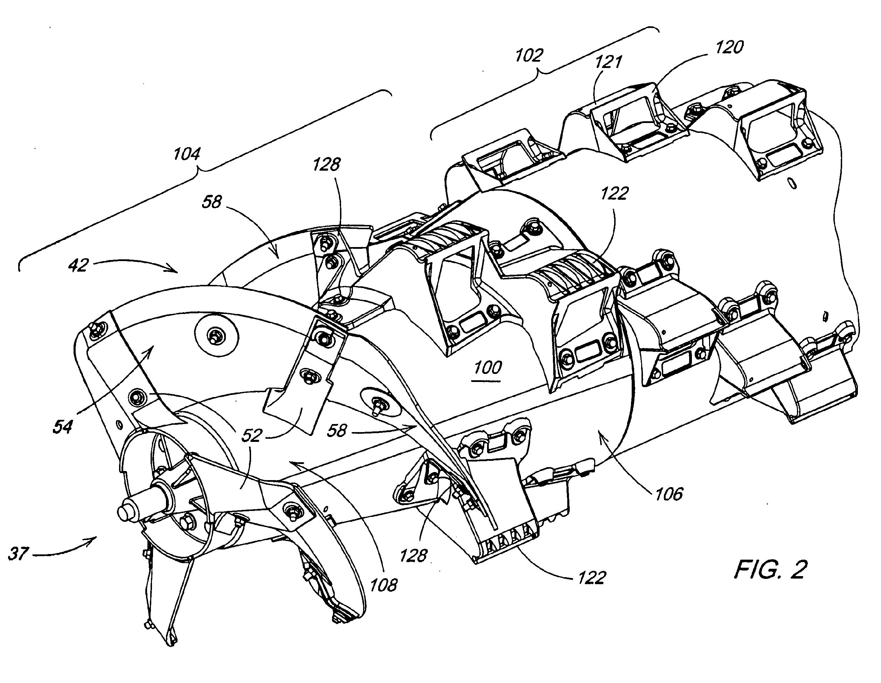

- Fig. 2: eine Seitenansicht des Beschickungs- und Dreschabschnitts des Rotors, und

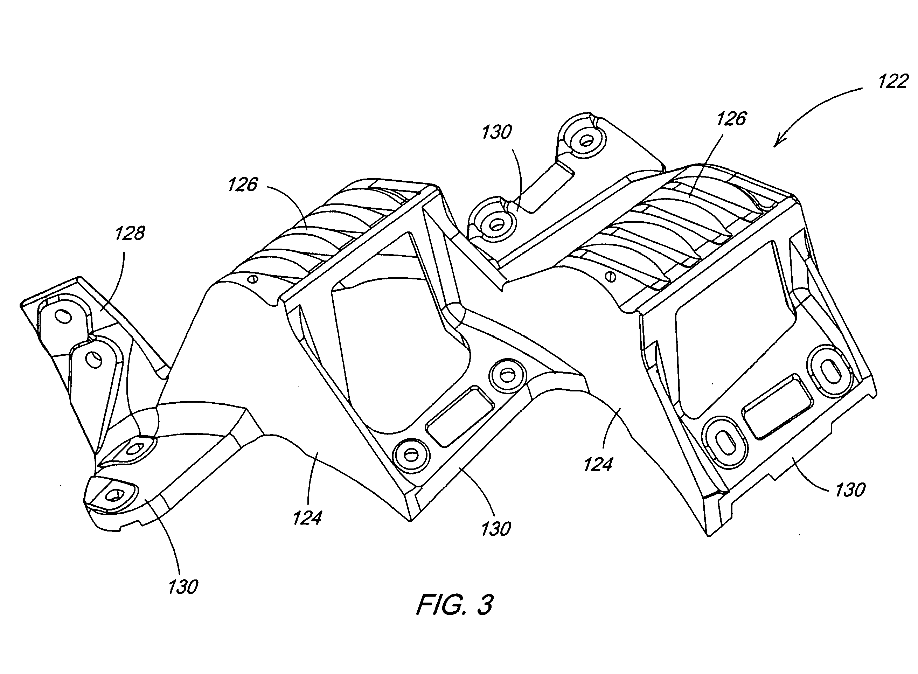

- Fig. 3: eine perspektivische Ansicht eines zusammengesetzten Dreschelements für den Rotor.

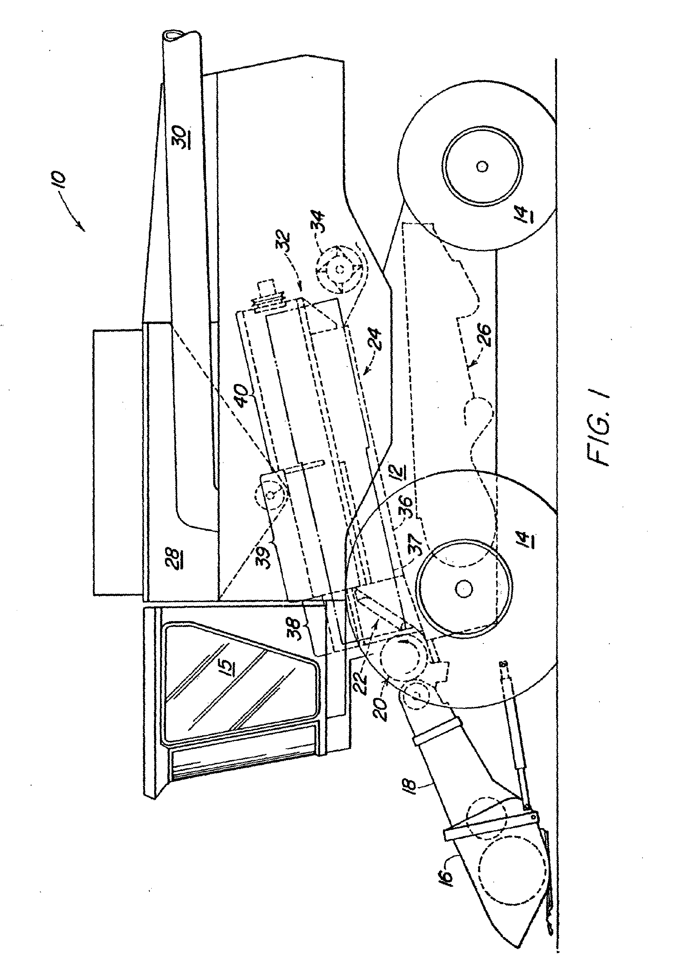

Die Figur 1 zeigt einen Mähdrescher 10, der einen tragenden Aufbau 12 mit im Eingriff mit dem Erdboden befindlichen Rädern 14 aufweist. Der Betrieb des Mähdreschers 10 wird von einer Bedienerkabine 15 aus gesteuert. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinrichtung 24 zu.

Die drehbare Gutbearbeitungseinrichtung 24 drischt und trennt das Erntegut. Korn und Spreu fallen durch Roste an der Unterseite der Gutbearbeitungseinrichtung 24 in ein Reinigungssystem 26. Das Reinigungssystem 40 entfernt die Spreu und führt das saubere Korn einem Elevator für sauberes Korn (nicht gezeigt) zu. Der Elevator für sauberes Korn legt das saubere Korn in einem Korntank 28 ab. Das saubere Korn im Korntank 28 kann durch einen Entladeschneckenförderer auf einen Kornwagen, Anhänger oder Lastwagen entladen werden. Gedroschenes und den Trennabschnitt verlassendes Stroh wird durch einen Auslass 32 aus der Erntegutbearbeitungseinheit 24 ausgestoßen und einer Fördertrommel 34 zugeführt. Die Fördertrommel 34 stößt das Stroh wiederum an der Rückseite des Mähdreschers 10 aus.

Die axiale Gutbearbeitungseinrichtung 24 umfasst ein Rotorgehäuse 36 und einen darin angeordneten Rotor 37. Die vorderen Teile des Rotors 37 und des Rotorgehäuses 36 definieren den Beschickungsabschnitt 38 der Gutbearbeitungseinrichtung 24. In Längsrichtung stromab des Beschickungsabschnitts 38 sind der Dreschabschnitt 39 und der Trennabschnitt 40. Der Rotor 37 umfasst eine Trommel 100, an der Gutbearbeitungselemente für den Beschickungsabschnitt 38, den Dreschabschnitt 39 und den Trennabschnitt 40 befestigt sind. Die Trommel 100 umfasst einen rückwärtigen zylindrischen Abschnitt 102 und einen sich nach vorn erstreckenden, kegelstumpfförmigen Abschnitt 104. Die Oberfläche des kegelstumpfförmigen Abschnitts 104 ist in einen hinteren Bereich 106 in der Nähe des rückwärtigen zylindrischen Abschnitts 102 und einen vorderen Bereich 108 aufgeteilt.

Der Rotor 37 ist im Beschickungsabschnitt 38 mit wendelförmigen Beschickungselementen 42 versehen, die im vorderen Bereich 108 des kegelstumpfförmigen Abschnitts 102 der Trommel 100 angeordnet sind. Die wendelförmigen Beschickungselemente 42 greifen in das Erntegut ein, das von der Leittrommel 20 und dem Einlassübergangsabschnitt 22 einläuft. Die Beschickungselemente 42 setzen sich aus einem vorderen Abschnitt 54 und einem hinteren Abschnitt 58 zusammen. Der vordere Abschnitt 54 jedes Beschickungselements 42 ist durch Befestigungszusammenbauten 52 an der Trommel 100 angeschraubt. Der rückwärtige Bereich 58 jedes Beschickungselements 42 ist an einer Beschickungselementbefestigungseinrichtung 128 angeschraubt, die sich von einem benachbarten Dreschelement 120 erstreckt.

Unmittelbar stromab des Beschickungsabschnitts 38 befindet sich der Dreschabschnitt 39 der Gutbearbeitungseinrichtung 24. Im Dreschabschnitt 39 ist der Rotor 37 mit einer Anzahl an Dreschelementen 120 und 122 ausgestattet, um das vom Beschickungsabschnitt 38 herangeförderte Erntegut zu dreschen. Die Dreschelemente 122 sind an dem hinteren Bereich 106 des kegelstumpfförmigen Abschnitts 104 befestigt, während die Dreschelemente 120 am rückwärtigen zylindrischen Abschnitt 102 der Trommel 100 angebracht sind. Die Dreschelemente 120 am zylindrischen Abschnitt 102 der Trommel 100 umfassen jeweils eine hohle Trägerstruktur mit einem Guteingriffsabschnitt 121.

Die am hinteren Bereich 106 des kegelstumpfförmigen Abschnitts 104 der Trommel 100 angeordneten Dreschelemente 122 sind zusammengesetzte Dreschelemente mit einer hohlen Trägerstruktur 124 mit zwei sich nach außen erstreckenden Guteingriffsabschnitten 126, die bei einer Drehung des Rotors 100 einen zylindrischen Weg überstreichen. Ihre äußeren Oberflächen sind somit parallel zur Achse des Rotors 37 orientiert. Von dem Dreschelement 122 erstreckt sich die oben erwähnte Beschickungselementbefestigungseinrichtung 128, an der der hintere Abschnitt 58 des benachbarten Beschickungselements 42 angebracht ist. Die Basis des Dreschelements 122 ist mit Befestigungsflanschen 130 versehen, durch die sich Befestigungsschrauben 57 erstrecken, um das Dreschelement 122 an der Trommel 100 zu befestigen.

Die Dreschelemente 122 sind in der dargestellten Ausführungsform mit zwei in einer versetzten Anordnung befestigten Guteingriffsabschnitten 126 gezeigt, sie könnten jedoch in einer Vielzahl möglicher Anordnungen mit einem oder mehreren Guteingriffsabschnitten ausgestattet sein. Die Guteingriffsabschnitte 126 sind außerdem mit Reibleisten ausgestattet, könnten aber auch mit anderen Oberflächenprofilen versehen sein, wie sie beispielsweise in der US 6 036 598 A offenbart sind.

Die sich nach außen erstreckenden Guteingriffsabschnitte 126 überstreichen in der dargestellten Ausführungsform einen zylindrischen Weg mit einem Durchmesser, der mit dem Durchmesser des Wegs übereinstimmt, der von dem Guteingriffsabschnitt 121 der Dreschelemente 120 an dem rückwärtigen zylindrischen Abschnitt 102 der Trommel 100 des Rotors 37 überstrichen wird. Die Guteingriffsabschnitte 126 der zusammengesetzten Dreschelemente 122 könnten jedoch auch eingerichtet sein, zylindrische Wege zu überstreichen, deren Durchmesser sich von denen der Guteingriffsabschnitte 121 der Dreschelemente 120 oder von benachbarten Guteingriffsabschnitten 126 desselben Dreschelementes 122 unterscheiden.

## Patentansprüche

1. Rotor (37) einer Gutbearbeitungseinrichtung (24) eines Mähdreschers (10), mit einer Trommel (100), an der ein Beschickungselement (42) und ein Erntegutbearbeitungselement befestigt sind, das mindestens einen Guteingriffsabschnitt (126) umfasst, der an einer Trägerstruktur (124) angeordnet ist, die am Rotor (37) befestigt ist, **dadurch gekennzeichnet, dass** die Trägerstruktur (124) mit einer Beschickungselementbefestigungseinrichtung (128) ausgestattet ist, an der der rückwärtige Bereich (58) des Beschickungselements (42) angeschraubt ist.

2. Rotor (37) nach Anspruch 1, **dadurch gekennzeichnet, dass** das Beschickungselement (42) wendelförmig ist.

3. Rotor (37 nach Anspruch 1 oder 2, **dadurch gekennzeichnet, dass** die Trägerstruktur (124) an einem kegelstumpfförmigen Abschnitt (104) der Trommel (100) befestigt ist.

4. Rotor (37) nach einem der Ansprüche 1 bis 3, **dadurch gekennzeichnet, dass** das Erntegutbearbeitungselement einen sich nach außen erstreckenden Guteingriffsabschnitt (126) aufweist, dessen Oberfläche bei einer Drehung des Rotors (37) einen zylindrischen Weg überstreicht.

5. Rotor (37) nach einem der vorhergehenden Ansprüche, **dadurch gekennzeichnet, dass** das Erntegutbearbeitungselement ein Dreschelement (122) ist.

6. Mähdrescher (10) mit einem Rotor (37) nach einem der Ansprüche 1 bis 5.

## Claims

1. A rotor (37) of a crop processing device (24) of a combine (10) comprising a drum (100) to which an infeed element (42) and a crop processing element are mounted, the crop processing element comprising at least one crop engaging portion (126) arranged on a support structure (124) mounted to the rotor (37), **characterized in that** the support structure (124) is provided with an infeed element mounting device (128) to which the rear portion (58) of the infeed element (42) is bolted.

2. A rotor (37) according to claim 1, **characterized in that** the infeed element (42) is helical.

3. A rotor (37) according to claim 1 or 2, **characterized in that** the support structure (124) is mounted to a frusto-conical part of the rotor (37).

4. A rotor (37) according to one claims 1 to 3, **characterized in that** the crop processing element comprises an outwardly extending crop engaging portion (126) sweeping a cylindrical path during rotation of the rotor (37).

5. A rotor (37) according to one of the preceding claims, **characterized in that** the crop processing element it is a threshing element.

6. A combine (10) comprising a rotor (37) according to one of the preceding claims.

## Revendications

1. Rotor (37) d'un dispositif de traitement de récolte (24) d'une moissonneuse-batteuse (10), comprenant un tambour (100) sur lequel sont fixés un élément de chargement (42) et un élément de traitement de récolte, qui comprend au moins une portion d'engagement de récolte (126), qui est disposée sur une structure porteuse (124) qui est fixée au rotor (37), **caractérisé en ce que** la structure porteuse (124) est équipée d'un dispositif de fixation de l'élément de chargement (128) sur lequel est vissée la région arrière (58) de l'élément de chargement (42).

2. Rotor (37) selon la revendication 1, **caractérisé en ce que** l'élément de chargement (42) est en forme d'hélice.

3. Rotor (37) selon la revendication 1 ou 2, **caractérisé en ce que** la structure porteuse (124) est fixée sur une portion de forme tronconique (104) du tambour (100).

4. Rotor (37) selon l'une quelconque des revendications 1 à 3, **caractérisé en ce que** l'élément de traitement de récolte présente une portion d'engagement de récolte (126) s'étendant vers l'extérieur, dont la surface balaye une course cylindrique lors d'une rotation du rotor (37).

5. Rotor (37) selon l'une quelconque des revendications précédentes, **caractérisé en ce que** l'élément de traitement de récolte est un élément batteur (122).

6. Moissonneuse-batteuse (10) comprenant un rotor (37) selon l'une quelconque des revendications 1 à 5.
